# EUROPÄISCHE PATENTSCHRIFT

(11) **EP 2 446 492 B1**
(45) Veröffentlichungstag und Bekanntmachung des Hinweises auf die Patenterteilung: **14.12.2016**
(21) Anmeldenummer: 10720000.8
(22) Anmeldetag: 04.05.2010
(51) Int. Cl.: H01M 10/658, H01M 10/6567, H01M 10/6556, H01M 10/6554, H01M 10/625, H01M 10/613, H01M 10/04, F28F 3/12, H01M 2/10, H01M 10/02

(54) **VORRICHTUNG ZUR SPANNUNGSVERSORGUNG EINES KRAFTFAHRZEUGS MIT EINEM KÜHLERBLOCK**
DEVICE FOR SUPPLYING VOLTAGE TO A MOTOR VEHICLE, COMPRISING A COOLER BLOCK
DISPOSITIF D'ALIMENTATION EN TENSION D'UN VÉHICULE À MOTEUR DOTÉ D'UN FAISCEAU DE RADIATEUR

(30) Priorität: 23.06.2009 DE 102009030017
(43) Veröffentlichungstag der Anmeldung: 02.05.2012
(73) Patentinhaber: Bayerische Motoren Werke Aktiengesellschaft, 80809 München (DE)
(72) Erfinder: ECKSTEIN, Frank, 92256 hahnbach (DE); LATH, Björn, 80805 München (DE); GOESMANN, Hubertus, 89564 Nattheim-Auernheim (DE); DIRMEIER, Micha, 80809 München (DE); PETZ, Philipp, 81379 München (DE); MEIJERING, Alexander, 80807 München (DE)
(86) Internationale Anmeldenummer: PCT/EP2010/002710
(87) Internationale Veröffentlichungsnummer: WO 2010/149243

(56) Entgegenhaltungen:
- EP-A1- 1 986 250
- EP-A1- 1 990 860
- EP-A2- 1 271 085
- EP-A2- 2 065 963
- WO-A2-01/48845
- DE-A1-102004 027 694
- DE-A1-102005 031 504
- DE-A1-102006 059 989
- DE-A1-102007 011 026
- JP-A- 2002 063 930
- JP-A- 2004 031 281
- JP-A- 2006 318 871
- US-A- 5 514 956
- US-A- 5 612 606
- US-A1- 2005 170 241
- US-A1- 2006 078 789
- US-A1- 2007 269 703
- US-B2- 6 504 712

## Beschreibung

Die Erfindung betrifft eine Vorrichtung zur Spannungsversorgung eines Kraftfahrzeugs, insbesondere eines PKW, LKW oder Motorrads. Eine solche Vorrichtung umfasst ein oder mehrere Speicherzellenmodule, welche jeweils ein oder mehrere elektrochemische Speicherzellen und/oder Doppelschichtkondensatoren umfassen, die neben- und/oder übereinander angeordnet sind. Die Vorrichtung umfasst weiter einen Kühlerblock, der eine Aufnahme für das oder die Speicherzellenmodule und eine Struktur zur Wärmeabfuhr der von dem oder den Speicherzellenmodulen abgegebenen Wärme umfasst. Hierbei ist die insbesondere Kühlmittel oder Kältemittel führende Struktur zur Wärmeabfuhr zumindest auf einer Seite der Aufnahme vorgesehen. Der Kühlerblock umfasst ferner eine Spannvorrichtung, welche dazu ausgebildet ist, eine vorgegebene Kraft zu erzeugen, durch die die Struktur zur Wärmeabfuhr an ein jeweiliges Speicherzellenmodul pressbar ist. Die Spannvorrichtung wiederum umfasst eine Anzahl an Verbindungsmitteln und auf den von dem oder den Speicherzellenmodulen abgewandten Seiten der Struktur zur Wärmeabfuhr eine jeweils dort angeordnete Spannplatte, wobei die Anzahl an Verbindungsmitteln dazu ausgebildet ist, die vorgegebene Kraft zu erzeugen und direkt oder indirekt auf die Struktur zur Wärmeabfuhr zu übertragen, indem die Anzahl an Verbindungsmitteln die Spannplatten kraft- und/oder stoffschlüssig miteinander verbindet. Die Erfindung betrifft ferner einen Kühlerblock für eine derartige Vorrichtung.

Die Speicherzellen und/oder Doppelschichtkondensatoren eines Speicherzellenmoduls sind typischerweise elektrisch in Reihe und/oder parallel miteinander verschaltet, um beispielsweise für einen Elektromotor eine ausreichende Energie bereitstellen zu können. Eine Vorrichtung zur Spannungsversorgung kann eine Mehrzahl solcher Speicherzellenmodule aufweisen. Die elektrochemischen Speicherzellen und/oder Doppelschichtkondensatoren können im Betrieb erhebliche Temperaturen erreichen, so dass deren Kühlung notwendig ist. Die Kühlung der elektrochemischen Speicherzellen und/oder Doppelschichtkondensatoren erfolgt von außen. Kann eine ausreichende Kühlung nicht mit hinreichender Sicherheit gewährleistet werden, so können rasch Defekte auftreten, die mit den Anforderungen an die Lebensdauer bei einer Verwendung in Automobilien wirtschaftlich nicht vereinbar sind.

Die US 2005/170241 A1 betrifft einen aus Speicherzellen aufgebauten elektrochemischen Energiespeicher, der eine Wärmetauschereinheit zum Kühlen der Speicherzellen aufweist, wobei die Speicherzellen zwischen Wärmetauscherkanälen angeordnet sind. Die mit den Speicherzellen befüllte Wärmetauschereinheit ist in einem Fixiergehäuse verbaut, wobei das Fixiergehäuse aus einem Fixierdruckplattenträger auf der Unterseite, einer Fixierdruckplatte auf der Oberseite und zwei seitlichen Fixierspannplatten besteht. Die Fixierdruckplatte wird mit einer definierten Druckkraft aufgebracht und anschließend werden die beiden Fixierspannplatten mit dem Fixierdruckplattenträger und der Fixierdruckplatte verbunden. Der Fixierdruckplattenträger weist eine Radiuskontur auf, die sich an die Radiuskontur des jeweiligen Wärmetauscherkanals anschmiegt, wodurch die Wärmeaustauscherkanäle optimal fixiert werden. Der Fixierdruckplattenträger weist im nicht montierten Zustand keine Wölbung auf, die zu einer in der Spannvorrichtung gegebenen Kraftrichtung entgegengesetzt ausgebildet ist, weshalb sich durch den montierten Fixierdruckplattenträger keine auf den Wärmetauscherkanal wirkende Federkraft erzeugen lässt.

Es ist daher Aufgabe der vorliegenden Erfindung, eine Vorrichtung zur Spannungsversorgung eines Kraftfahrzeugs sowie einen Kühlerblock zu schaffen, welche bei nach wie vor einfacher Montage eine noch zuverlässigere Kühlung des oder der Speicherzellenmodule ermöglichen.

Diese Aufgabe wird gelöst durch eine Vorrichtung zur Spannungsversorgung mit den Merkmalen des Patentanspruches 1 sowie einen Kühlerblock mit den Merkmalen des Patentanspruches 18. Vorteilhafte Ausgestaltungen ergeben sich aus den abhängigen Patentansprüchen.

Die Erfindung schafft eine Vorrichtung zur Spannungsversorgung eines Kraftfahrzeugs, insbesondere eines PKW, LKW oder eines Motorrads, mit einem oder mehreren Speicherzellenmodulen, welche jeweils ein oder mehrere elektrochemische Speicherzellen und/oder Doppelschichtkondensatoren umfassen, die neben- und/oder übereinander angeordnet sind, und mit einem Kühlerblock, der eine Aufnahme für das oder die Speicherzellenmodule und eine Struktur zur Wärmeabfuhr der von dem oder den Speicherzellenmodulen abgegebenen Wärme umfasst, wobei die Struktur zur Wärmeabfuhr zumindest auf einer Seite der Aufnahme vorgesehen ist, wobei der Kühlerblock ferner eine Spannvorrichtung umfasst, welche dazu ausgebildet ist, eine vorgegebene Kraft zu erzeugen, durch die die Struktur zur Wärmeabfuhr an ein jeweiliges Speicherzellenmodul pressbar ist, wobei die Spannvorrichtung eine Anzahl an Verbindungsmitteln und auf den von dem oder den Speicherzellenmodulen abgewandten Seiten der Struktur zur Wärmeabfuhr eine jeweils dort angeordnete Spannplatte umfasst, wobei die Anzahl an Verbindungsmitteln dazu ausgebildet ist, die vorgegebene Kraft zu erzeugen und direkt oder indirekt auf die Struktur zur Wärmeabfuhr zu übertragen, indem die Anzahl an Verbindungsmitteln die Spannplatten kraft- und/oder stoffschlüssig miteinander verbindet. Erfindungsgemäß weist die Spannplatte vor der Kraftbeaufschlagung durch die Anzahl an Verbindungsmitteln eine der Kraftrichtung entgegengesetzt ausgebildete Wölbung auf.

Der Erfindung liegt die Überlegung zu Grunde, dass ein Mindestdruck zwischen den Komponenten aufgebracht werden muss, um Lufteinschlüsse mit einem hohen thermischen Widerstand zu vermeiden und für einen guten thermischen Kontakt zu sorgen. Dieser Mindestdruck kann weiterhin Relativbewegungen der Komponenten zueinander verhindern. Der notwendige Mindestdruck wird bei einer Vorrichtung zur Spannungsversorgung durch die Spannvorrichtung bereitgestellt. Die Spannvorrichtung erzeugt zwischen der Struktur zur Wärmeabfuhr und einem jeweiligen Speicherzellenmodul die notwendige Kraft, um den thermischen Kontakt zwischen den Speicherzellenmodulen und der Struktur zur Wärmeabfuhr zu verbessern.

Durch die erfindungsgemäße Ausbildung der Spannplatte, gemäß der diese vor der Kraftbeaufschlagung durch die Anzahl an Verbindungsmitteln eine der Kraftrichtung entgegengesetzt ausgebildete Wölbung aufweist, kann ein guter thermischer Kontakt in der Mitte der Längsachse einer jeweiligen Speicherzelle bzw. eines jeweiligen Speicherzellenmoduls erzielt werden. Typischerweise ist in diesem Bereich die Durchbiegung der Kühlplatte bzw. Spannplatte am größten. Um einer solchen Durchbiegung entgegen zu wirken, wird die Spannplatte, welche zur Verspannung dient, in die entgegengesetzte Richtung vorgebogen. Durch die Verspannung wird die Spannplatte in eine plane Form gebracht. Die Federkraft wirkt nun auf die Struktur zur Wärmeabfuhr und unterstützt damit die Erzeugung der erwünschten Kraft zwischen der Spannplatte und den jeweiligen Speicherzellenmodulen. Durch das Vorsehen der Spannplatten, zusätzlich zu der Struktur zur Wärmeabfuhr, wird zudem ein strukturell stabilerer Kühlerblock bereitgestellt.

Wie aus der nachfolgenden Beschreibung ersichtlich werden wird, kann es sich bei den Verbindungsmitteln um eine einfache Schraube oder ein ähnliches Befestigungsmittel handeln. Prinzipiell ist jede Art von Verbindungsmittel geeignet, welche die vorgegebene Kraft erzeugen kann.

Gemäß einer weiteren Ausgestaltung umfasst die Struktur zur Wärmeabfuhr zumindest auf den gegenüberliegenden Seiten der Aufnahme jeweils eine Kühlplatte mit Kühlkanälen für ein Kühlmittel oder ein Kältemittel, die an einer Stirnseite der Aufnahme über flexible Kühlkanäle strömungstechnisch verbunden sind. Die flexiblen, z.B. bogenförmigen, Kühlkanäle gleichen während der Montage einen Distanzunterschied zwischen den Kühlplatten nach der Kraftbeaufschlagung aus indem sie bei der Verspannung nachgeben und z.B. ausbiegen oder auslenken.

Vorteilhafterweise sind die Spannplatten aus einem Metall oder einem Kunststoff gebildet. Es ist hierbei besonders bevorzugt, wenn die Spannvorrichtung, insbesondere die Spannplatte, aus einem thermisch isolierenden Material gebildet ist oder ein thermisch isolierendes Material umfasst. Beispielsweise kann eine thermisch isolierende Schicht auf die aus Metall bestehende Spannplatte aufgebracht sein. Hierdurch kann die Kühleffizienz der Vorrichtung zur Spannungsversorgung verbessert werden.

In einer alternativen Ausgestaltung ist die Anzahl an Verbindungsmitteln mit den auf gegenüberliegenden Seiten der Aufnahme angeordneten Kühlplatten kraft- und/oder formschlüssig miteinander verbunden. Bei dieser Ausgestaltung ist sichergestellt, dass die Kühlplatten ausreichend dimensioniert sind, um die durch die Verbindungsmittel aufgebrachten Kräfte aufnehmen zu können. Dies kann beispielsweise durch die Materialstärke der Kühlplatten oder lokale Verstärkungen im Bereich der Krafteinleitung sichergestellt werden.

Es ist weiterhin vorgesehen, dass die Anzahl an Verbindungsmitteln direkt oder indirekt über eine oder mehrere Halteschienen, welche aus einem steifen Material gebildet sind, mit den Kühlplatten oder den Spannplatten verbunden sind. Durch das Vorsehen der Halteschienen braucht die Kraft nicht direkt in die Kühlplatten oder die Spannplatten eingeleitet werden. Vielmehr werden die Kräfte lokal in die Halteschienen eingeleitet und durch diese auf eine größere Fläche verteilt. Die Halteschienen können beispielsweise aus einem Metall oder einem entsprechend steifen Kunststoff gefertigt sein.

In einer weiteren Ausgestaltung umfasst das Verbindungsmittel eine Schraube, welche in eine insbesondere zylinderförmig ausgebildete Mutter mit Innengewinde eingreift, wobei die Mutter mit der Struktur zur Wärmeabfuhr direkt, über die Spannplatte und/oder die Halteschiene auf einer Seite der Aufnahme und die Schraube mit der Struktur zur Wärmeabfuhr direkt, über die Spannplatte und/oder die Halteschiene auf der gegenüberliegenden Seite der Aufnahme in Wirkverbindung steht. Alternativ kann das Verbindungsmittel auch durch eine vercrimpte Federstahlspeiche gebildet sein. In einer Weiterbildung weist der Zylinderabschnitt der Mutter ein vorderes und ein hinteres Ende auf, so dass die Schraube bei der durch sie erzeugten Kraft der Spannvorrichtung nicht über das hintere Ende hinausragt. Hierdurch steht ein ausreichend großer Betätigungsweg für die Schraube zur Verfügung, ohne dass diese über eine Seitenfläche der Vorrichtung zur Spannungserzeugung hinausragt. Durch ausreichende Dimensionierung der Länge der Mutter kann darüber hinaus eine Vormontage erfolgen, gemäß der die Schraube und die Mutter bereits miteinander verbunden sind, bevor die Speicherzellenmodule in die jeweilige Aufnahme des Kühlerblocks eingebracht werden. Zur Erzeugung der vorgegebenen Kraft brauchen die Schrauben lediglich weiter in die Muttern hineingedreht werden.

Zur Minimierung des für die erfindungsgemäße Vorrichtung benötigten Bauraums ist weiterhin vorgesehen, dass zumindest manche der Anzahl an Verbindungsmitteln durch die Aufnahme hindurchgeführt sind. Insbesondere kann ein jeweiliges Verbindungsmittel seitlich an einem Speicherzellenmodul oder zwischen zwei Speichermodulen vorbei geführt sein.

Gemäß einer weiteren Ausgestaltung weist die Spannvorrichtung, insbesondere die Spannplatten, eine Aufnahme und/oder Befestigung für ein elektronisches Bauelement, insbesondere eine Steuerung, für die Vorrichtung auf. Eine solche Steuerung ist beispielsweise als CSC (Cell Supervising Circuit) bekannt. Diese Steuerung dient dazu, den Energiehaushalt der erfindungsgemäßen Vorrichtung zur Spannungsversorgung des Kraftfahrzeugs zu regulieren.

Es ist ferner zweckmäßig, wenn in einem Speicherzellenmodul mit einer Mehrzahl an Speicherzellen und/oder Doppelschichtkondensatoren diese über thermisch leitende und mechanisch steife Profile verbunden sind, wobei die Spannvorrichtung die Struktur zur Wärmeabfuhr auf die Profile drückt. Die Profile können beispielsweise als Strangpressprofile aus Aluminium gebildet sein. Im Crashfall leiten die Profile eine auf die Vorrichtung wirkende Kraft um die Speicherzellen herum bzw. von den Speicherzellen ab. Der primäre Zweck der Profile besteht jedoch darin, die Wärme von den Speicherzellen zu der Struktur zur Wärmeabfuhr zu leiten. Durch die Gestalt der Profile ist es dabei möglich, Wärme über eine große Fläche von den Speicherzellen abzuleiten.

Neben den vorgenannten Profilen können auch sogenannte Crashplatten zum Einsatz kommen, die im Crashfall ebenfalls für einen Schutz der Speicherzellen vor Beschädigung sorgen. Vorteilhafterweise kann seitlich an einem Speicherzellenmodul vorbei und/oder zwischen zwei Speicherzellenmodulen eine Crashplatte vorgesehen sein, welche abschnittsweise über die Spannvorrichtung hinausragt, wodurch im Crashfall eine auf die Vorrichtung wirkende Kraft durch die Crashplatte oder -platten aufgenommen und um die Speicherzellenmodule herum abgleitet wird. Im eingebauten Zustand der Vorrichtung erstrecken sich die Crashplatten vorteilhafterweise in Fahrzeuglängsachsenrichtung. Bei einer Verformung eines Karosserieteils und mechanischem Kontakt mit der Vorrichtung werden die Kräfte zunächst von der Crashplatte aufgenommen und um die Speicherzellenmodule herumgeleitet, wodurch eine Beschädigung der Module bis zum Auftreten einer Maximalkraft verhindert werden kann. Zu diesem Zweck weist die Crashplatte Zapfen auf, welche durch die Struktur zur Wärmeabfuhr und die Spannvorrichtung hindurch geführt sind und über die Spannvorrichtung hinaus ragen. Durch die über die Spannvorrichtung hinausragenden Zapfen der Crashplatte ist sichergestellt, dass diese im Falle einer Deformation der Karosserie des Fahrzeugs als erste Elemente mit den sich deformierenden Karosseriebauteilen in Kontakt kommen. Zweckmäßigerweise erstrecken sich die Crashplatte und die Zapfen der Crashplatte in Richtung der Anzahl an Verbindungsmitteln. Insbesondere ist es vorteilhaft, wenn die Verbindungsmittel und die Crashplatte räumlich zueinander angeordnet sind, um mit möglichst geringem Bauraum auskommen zu können.

Gemäß einer weiteren zweckmäßigen Ausgestaltung weist die Spannvorrichtung eine Elastizität zum Ausgleich thermisch bedingter Längenänderungen des oder der Speicherzellenmodule und/oder der Struktur zur Wärmeabfuhr auf. Die Elastizität kann insbesondere in den Verbindungsmitteln oder durch die Verbindungsmittel bereitgestellt werden. Hierdurch ist sichergestellt, dass auch bei thermisch bedingten oder alterungsbedingten Längenänderungen die beabsichtigte Kraftbeaufschlagung weiterhin sichergestellt ist.

Die Elastizität der Spannvorrichtung kann durch die Materialeigenschaften der Spannvorrichtung und/oder durch deren konstruktiven Aufbau, insbesondere der Anzahl an Verbindungselementen, bereitgestellt sein. Beispielsweise können die Verbindungsmittel über einen Sprengring, welcher eine Federkraft erzeugt, versehen sein, wodurch die Spannvorrichtung dauerhaft die vorgegebene Kraft zwischen der Struktur zur Wärmeabfuhr und einem jeweiligen Speicherzellenmodul erzeugt.

Zur Fixierung der Vorrichtung an dem Fahrzeug kann die Spannvorrichtung gemäß einer weiteren vorteilhaften Ausgestaltung auf einer Seite der Aufnahme zumindest ein Festlager (z.B. in Gestalt einer Öse) und auf der anderen Seite der Aufnahme zumindest ein Loslager aufweisen. Durch die einseitige Fixierung der Vorrichtung ist sichergestellt, dass sich die Verspannplatten über die Lebensdauer nachsetzen können, wodurch die Kühl- und Verspannplatten immer im thermischen Kontakt mit den Modulen bleiben. Das Festlager und/oder das Gleitlager können wahlweise an einer der Spannplatten und/oder der Halteschienen ausgebildet sein. Zweckmäßigerweise befinden sich an einer Seitenwandung der Vorrichtung sämtliche Festlager, während auf der gegenüberliegenden Seitenwandung der Vorrichtung die Gleitlager vorgesehen sind.

Eine besonders einfache Handhabung und Montage der erfindungsgemäßen Vorrichtung ergibt sich dann, wenn der Kühlerblock selbsttragend ist. Auf diese Weise ist es möglich, unterschiedliche Komponenten der Vorrichtung von unterschiedlichen Herstellern zu beziehen und diese zu einem späteren Zeitpunkt miteinander zu vereinen. Insbesondere kann der Kühlerblock als separates Bauteil bereitgestellt werden. Die Speicherzellenmodule können dann beim Hersteller der Vorrichtung, z. B. beim Hersteller des Fahrzeugs oder der Speichermodule, in den Kühlerblock eingeführt und mit diesem verspannt werden.

Es ist weiterhin zweckmäßig, wenn eine korrosionshemmende Schicht zwischen der Spannvorrichtung und der Struktur zur Wärmeabfuhr vorgesehen ist. Dies ist zweckmäßig, wenn diese aus unterschiedlichen Materialien bestehen, welche eine große Potentialdifferenz zueinander aufweisen. Dies ist beispielsweise dann der Fall, wenn Aluminium und ein anderes Metall (z.B. Stahl) miteinander in Verbindung gebracht werden. Auf diese Weise wird eine dauerhafte Zuverlässigkeit der Vorrichtung bereitgestellt.

Die Erfindung schafft auch einen Kühlerblock für eine Vorrichtung zur Spannungsversorgung eines Kraftfahrzeugs, insbesondere eines PKW, LKW oder Motorrads, wobei die Vorrichtung zur Spannungsversorgung ein oder mehrere Speicherzellenmodule aufweist, welche jeweils ein oder mehrere elektrochemische Speicherzellen und/oder Doppelschichtkondensatoren umfassen, die neben- und/oder übereinander angeordnet sind. Der Kühlerblock umfasst eine Aufnahme für das oder die Speicherzellenmodule, eine Struktur zur Wärmeabfuhr der von dem oder den Speicherzellenmodulen abgegebenen Wärme, wobei die Struktur zur Wärmeabfuhr hierbei zumindest auf einer Seite der Aufnahme vorgesehen ist. Ferner umfasst der Kühlerblock eine Spannvorrichtung, welche dazu ausgebildet ist, eine vorgegebene Kraft zu erzeugen, durch die die Struktur zur Wärmeabfuhr an ein jeweiliges Speicherzellenmodul pressbar ist. Die Spannvorrichtung umfasst eine Anzahl an Verbindungsmitteln und auf den von dem oder den Speicherzellenmodulen abgewandten Seiten der Struktur zur Wärmeabfuhr eine jeweils dort angeordnete Spannplatte, wobei die Anzahl an Verbindungsmitteln dazu ausgebildet ist, die vorgegebene Kraft zu erzeugen und direkt oder indirekt auf die Struktur zur Wärmeabfuhr zu übertragen, indem die Anzahl an Verbindungsmitteln die Spannplatten kraft- und/oder stoffschlüssig miteinander verbindet. Erfindungsgemäß weist die Spannplatte vor der Kraftbeaufschlagung durch die Anzahl an Verbindungsmitteln eine der Kraftrichtung entgegengesetzt ausgebildete Wölbung auf.

Der erfindungsgemäße Kühlerblock, der im Wesentlichen eine Kombination aus Struktur zur Wärmeabfuhr und Spannvorrichtung darstellt, weist die gleichen Vorteile auf, wie diese in Verbindung mit der erfindungsgemäßen Vorrichtung beschrieben wurden.

Die Erfindung wird nachfolgend näher anhand von Ausführungsbeispielen in den Zeichnungen beschrieben. Es zeigen:
- Fig. 1: einen Schnitt durch einen schematischen, erfindungsgemäßen Kühlerblock,
- Fig. 2: eine teilweise Querschnittsdarstellung einer erfindungsgemäßen Vorrichtung zur Spannungsversorgung,
- Fig. 3: eine perspektivische Darstellung eines erfindungsgemäßen Kühlerblocks,
- Fig. 4: eine Darstellung einer in einem erfindungsgemäßen Kühlerblock verwendeten Crashplatte,
- Fig. 5: eine perspektivische, vergrößerte Darstellung eines erfindungsgemäßen Kühlerblocks im Bereich zweier aneinander grenzender Crashplatten,
- Fig. 6: eine perspektivische und geschnittene Darstellung einer erfindungsgemäßen Vorrichtung zur Spannungsversorgung,
- Fig. 7: eine teilweise perspektivische Darstellung eines erfindungsgemäßen Kühlerblocks, aus der der Aufbau einer Spannvorrichtung ersichtlich ist,
- Fig. 8: eine bei einer Spannvorrichtung verwendete Halteschiene,
- Fig. 9: eine Querschnittsdarstellung der erfindungsgemäßen Kühlerblocks, welche dessen Befestigung an einem Karosseriebauteil verdeutlicht,
- Fig. 10: eine teilweise perspektivische Darstellung des erfindungsgemäßen Kühlerblocks, welche eine Loslagerung an dem Karosseriebauteil verdeutlicht, und
- Fig. 11a und 11b: eine schematische Draufsicht auf einen erfindungsgemäßen Kühlerblock, aus der das Vorgehen bei der Verspannung ersichtlich wird.

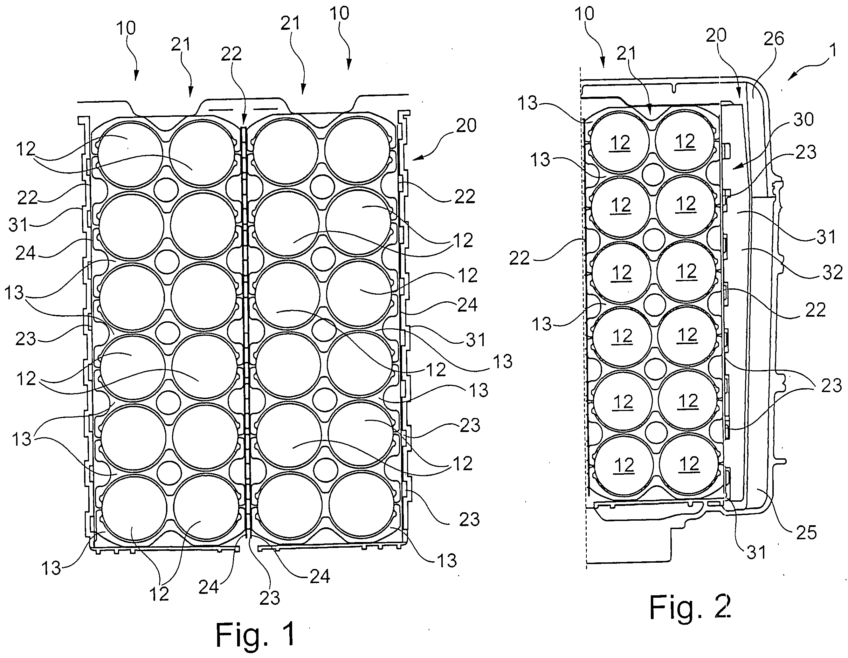

Fig. 1 zeigt eine Querschnittsdarstellung eines schematischen, erfindungsgemäßen Kühlerblocks 20. Der Kühlerblock 20 umfasst eine jeweilige Aufnahme 21 für beispielhaft zwei nebeneinander angeordnete Speicherzellenmodule 10. Jedes der Speicherzellenmodule 10 umfasst eine Anzahl an elektrochemischen Speicherzellen 12 und/oder Doppelschichtkondensatoren, die beispielhaft in zwei Reihen nebeneinander angeordnet sind. Jede Reihe umfasst lediglich beispielhaft sechs Speicherzellen 12 übereinander. Zur mechanischen Fixierung der Speicherzellen 12 sowie zur Verbesserung der Wärmeableitung sind die Speicherzellen 12 mit thermisch leitenden Profilen 13 gekoppelt. Die Profile 13 sind beispielsweise Strangpressprofile aus Aluminium. Die Querschnittsgestalt eines jeweiligen Profils 13 ist an die Gestalt der Speicherzellen 12 angepasst, wobei jeweils zwei nebeneinander liegende Speicherzellen 12 in einem Profil 13 zum Liegen kommen. Die im Ergebnis flügelförmigen Profile 13 sind dabei seitlich plan ausgeführt, so dass diese mit einer Kühlmittel oder Kältemittel führenden Struktur 22 des Kühlerblocks 20 in großflächigen Kontakt gebracht sind.

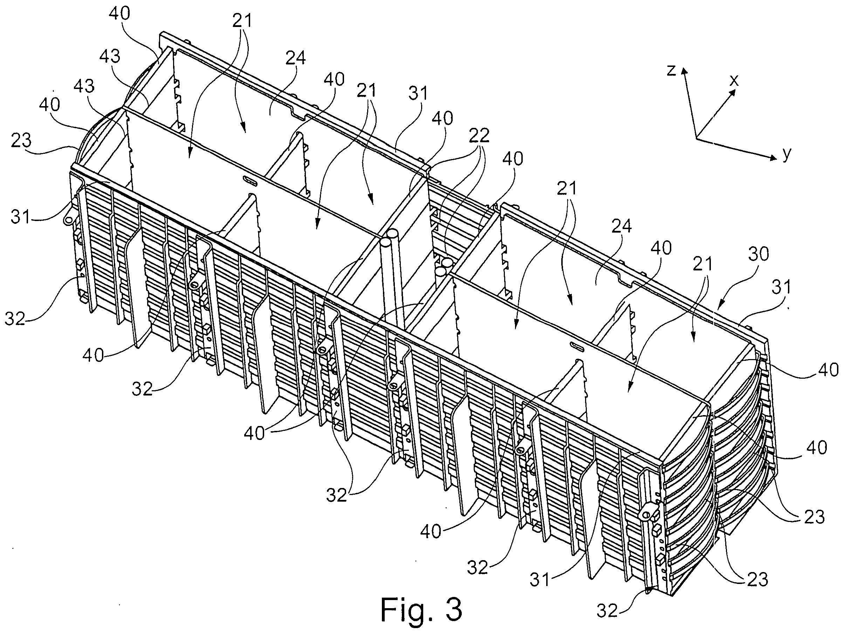

Die Kühlmittel oder Kältemittel führende Struktur 22 umfasst auf den gegenüberliegenden Seiten einer jeweiligen Aufnahme 21 jeweils eine Kühlplatte 24, auf deren von den Speicherzellenmodulen 10 abgewandten Seiten sich eine Anzahl an Kühlkanälen 23 erstreckt. Die Kühlplatten bestehen vorzugsweise aus Aluminium. Die Kühlkanäle 23 können beispielsweise als Multiport-Tubes (sog. Flachrohre) ausgeführt sein. Die Kühlkanäle 23 erstrecken sich parallel zu einer Längsachse einer jeweiligen Speicherzelle in die Blattebene hinein. Um die zwischen den zwei Speicherzellenmodulen 10 doppelt anfallende Wärme abtransportieren zu können, ist optional zwischen den zwei, einem jeweiligen Speicherzellenmodul 10 zugeordneten Kühlplatten 24 die doppelte Anzahl an Kühlkanälen 23 vorgesehen. Dies ergibt sich auch daraus, dass auf den gegenüberliegenden Seiten einer jeweiligen Aufnahme 21 angeordneten Kühlkanäle über an der Stirnseite der Aufnahme 21 bogenförmig ausgebildete Kühlkanalabschnitte (vgl. Fig. 3) strömungstechnisch miteinander verbunden sind.

Auf den Außenseiten der Kühlmittel oder Kältemittel führenden Struktur 22 ist jeweils eine Spannplatte 31 vorgesehen, welche über eine in Fig. 1 nicht dargestellte Anzahl an Verbindungsmitteln miteinander verbunden sind. Durch die Spannplatten 31 wird eine Kraft erzeugt, durch die die Kühlmittel oder Kältemittel führende Struktur 22, d.h. die Kühlplatten 24, an ein jeweiliges Speicherzellenmodul 10 gepresst werden. Die Spannplatten 31 sowie die nicht dargestellten Verbindungsmittel sind Bestandteil einer Spannvorrichtung 30, welche zusammen mit der Kühlmittel oder Kältemittel führenden Struktur 22 den Kühlerblock 20 ausbildet. Die Verbindungsmittel verbinden die Spannplatten 31 kraft- und/oder formschlüssig miteinander. Die Spannplatten 31 sind bevorzugt aus einem Metall oder einem Kunststoff gebildet. Insbesondere sind die Spannplatten 31 aus einem Material gefertigt, welches thermisch isolierend ist, um eine Abfuhr der in den Speicherzellen entstehenden Wärme durch die Kühlmittel oder Kältemittel führende Struktur 22 zu ermöglichen bzw. unterstützen. Wird als Material für die Spannplatten 31 Metall verwendet, so ist dieses, um die thermische Isolation bereit stellen zu können, mit einer Isolationsbeschichtung zu versehen.

Wie aus der Schnittdarstellung der Fig. 1 ohne Weiteres ersichtlich ist, sind die Spannplatten 31 unter die jeweiligen Speicherzellenmodule 10 herum gezogen. Die Spannplatten 31 bilden in diesem unteren Bodenbereich einen Abschluss des Kühlerblocks 20 aus. Durch die Formgebung der Spannplatten 31 wird darüber hinaus die Eigenstabilität des Kühlerblocks 20 verbessert. Es ist bevorzugt, wenn der Kühlerblock 20 eine selbsttragende Struktur aufweist, da dann die Handhabung und Fertigung einer erfindungsgemäßen Vorrichtung zur Spannungsversorgung auf besonders einfache Weise möglich ist. Es ist deshalb gegebenenfalls auch zweckmäßig, wenn die Spannplatten 31 auf ihrer von den Speicherzellenmodulen 10 abgewandten Seitenflächen mit einer Profilierung versehen sind, welche z.B. - wie in Fig. 1 gezeigt - zur Aufnahme der Kühlkanäle dienen kann und eine verbesserte Stabilität und Steifigkeit der Spannplatten 31 und damit des Kühlerblocks 20 ermöglicht.

Durch die Spannvorrichtung 30 in Gestalt der Spannplatten 31 sowie der diese verbindende Verbindungsmittel wird somit eine Kraft erzeugt, durch die die Kühlmittel oder Kältemittel führende Struktur 22 an ein jeweiliges Speicherzellenmodul 10 gepresst werden. Genauer werden die Kühlplatten 24 an die Wärme leitenden Profile 13 der Speicherzellenmodule 10 gepresst. Durch den aufgebrachten Mindestdruck zwischen den Komponenten können Lufteinschlüsse, welche einen hohen thermischen Widerstand aufweisen, vermieden werden. Hierdurch wird ein guter thermischer Kontakt zwischen den Wärme ableitenden Profilen 13 und der Kühlmittel oder Kältemittel führenden Struktur 22 hergestellt, so dass eine gute Kühlung der Speicherzellen 12 gewährleistet ist. Durch den Druck der Spannvorrichtung werden weiterhin Relativbewegungen der Bauteile zueinander verhindert, da aufgrund der aufgebrachten Kraft ein Reibschluss gegeben ist.

Sofern die Spannplatten 31 aus einem Stahlblech gefertigt sind und die Kühlplatten 24 aus Aluminium besteht, wird zur Vermeidung von Korrosion eine korrosionshemmende Schicht zwischen den Spannplatten 31 und der Kühlmittel oder Kältemittel führenden Struktur 22 vorgesehen. Die korrosionshemmende Schicht kann beispielsweise auf die Spannplatten 31 aufgebracht sein. Auf das Vorsehen einer solchen korrosionshämmenden Schicht kann verzichtet werden, wenn die Spannplatten z.B. aus Edelstahl oder Kunststoff gefertigt werden.

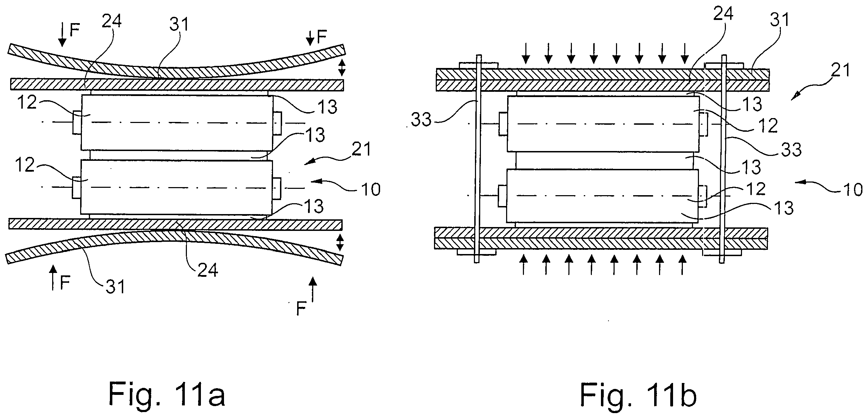

Um einen guten thermischen Kontakt in Erstreckungsrichtung der Speicherzellen 12 (d.h. in die Blattebene hinein) herzustellen, muss die Durchbiegung des Kühlerblocks 20 und insbesondere der Spannplatten 31 berücksichtigt werden. Um einer solchen Durchbiegung entgegen zu wirken, werden die Spannplatten 31 in die der späteren Kraftrichtung entgegengesetzten Richtung vorgebogen. Dies ist schematisch in Fig. 12a in einer Draufsicht dargestellt, wobei der Kühlerblock im Ausführungsbeispiel zur Aufnahme eines einzigen Speicherzellenmoduls 10 ausgebildet ist. Fig. 11a ist hierbei ohne Weiteres zu entnehmen, dass die Spannplatten 31 ohne Kraftbeaufschlagung durch die Verbindungsmittel im Bereich der Enden einer jeweiligen Speicherzelle 12 beabstandet zu der zugeordneten Kühlplatte 24 ausgebildet sind. Durch die Verspannung der Spannplatten 31 mittels der Verbindungsmittel 33 werden die Spannplatten gerade gebogen und eine Federkraft der Spannplatten wirkt zusätzlich auf die Kühlplatten des Kühlerblocks 20. Dies ist schematisch in Fig. 11 b dargestellt, aus der weiterhin gut ersichtlich ist, dass die Verbindungselemente 33 seitlich an dem Speicherzellenmodul 10 vorbeigeführt sind. Diese in Fig. 11 b dargestellte Designvariante ist einerseits aus Bauraumminimierungsgründen und andererseits aus thermischen Gründen bevorzugt.

Ein Verbindungsmittel 33 umfasst beispielsweise eine Schraube, die in eine zylinderförmig ausgebildete Mutter mit einem Innengewinde eingreift. Dabei beaufschlagt die Mutter die Spannplatte 31 auf einer Seite der Aufnahme 21 bzw. des Speicherzellenmoduls 10 und die Schraube die Spannplatte 31 auf der gegenüberliegenden Seite der Aufnahme 21 bzw. Speicherzellenmoduls 10 mit Kraft. Der Zylinderabschnitt der Mutter ist bevorzugt derart ausgebildet, dass die Schraube bei der durch sie erzeugten vorgegebenen Kraft nicht über ein hinteres Ende der Mutter hinausragt.

Grundsätzlich sind auch anders ausgestaltete Verbindungsmittel in einer erfindungsgemäßen Vorrichtung zur Spannungsversorgung denkbar, solange sichergestellt ist, dass die vorgegebene Kraftbeaufschlagung auf die Kühlmittel oder Kältemittel führende Struktur erfolgt. Insbesondere könnte das Verbindungsmittel auch durch eine vercrimpte Federstahlspeiche gebildet sein.

Fig. 2 zeigt eine teilweise Querschnittsdarstellung einer erfindungsgemäßen Vorrichtung zur Spannungsversorgung. In dieser Darstellung ist lediglich das rechte in Fig. 1 gezeigte Speicherzellenmodul 10 in seiner Aufnahme 21 des Kühlerblocks 20 dargestellt. Weiterhin ersichtlich ist ein den Kühlerblock 20 umgebendes Gehäuse. Dieses ist aus einem ersten Gehäuseteil 25, einer Gehäusewanne, und einem zweiten Gehäuseteil 26, einem Gehäusedeckel, gebildet. Das erste und zweite Gehäuseteil 25, 26 können beispielsweise aus einem Kunststoff oder Aluminium-Guss gefertigt sein. Der mit den Speicherzellenmodulen 10 bestückte Kühlerblock 20 kann, nachdem die Verspannung über die beschriebene Spannvorrichtung erfolgte und die Herstellung sämtlicher elektrischer Verbindungen der Speicherzellenmodule vorgenommen wurde in das erste Gehäuseteil 25 eingebracht und mit dem zweiten Gehäuseteil 26 verschlossen werden. In Fig. 2 ist ferner eine Halteschiene 32 der Spannvorrichtung 30 ersichtlich. Entlang einer jeweiligen Seitenfläche des Kühlerblocks 20 ist eine Mehrzahl derartiger Halteschienen 32 vorgesehen. Die aus einem steifen Material gebildeten Halteschienen 32 dienen dazu, die Verbindungsmittel 33 indirekt mit den Spannplatten 31 zu verbinden. Die durch die Verbindungselemente aufgebrachte Kraft wirkt somit nicht unmittelbar auf die Spannplatten 31, sondern auf die Halteschienen 32, wodurch die Kraft über die Fläche der Halteschienen verteilt und auf die Spannplatten 31 übertragen wird.

Aus der beschriebenen Funktionalität der Halteschienen 32 ergibt sich somit bereits, dass diese im Bereich zwischen in Längsrichtung benachbarten Speicherzellenmodulen angeordnet sind.

Dies wird besser aus der perspektivischen Darstellung eines erfindungsgemäßen Kühlerblocks 20 in Fig. 3 ersichtlich. Der Kühlerblock 20 umfasst beispielhaft acht Aufnahmen 21 für ein jeweiliges Speicherzellenmodul. Vier Aufnahmen 21 sind in zwei Reihen nebeneinander in Längsrichtung angeordnet. Gemäß dem eingezeichneten Koordinatensystem entspricht die Längsrichtung des Kühlerblocks 20 einer Fahrzeugquerachse (y-Achse des Koordinatensystems). Aus der perspektivischen Darstellung sind die längs der Spannplatten 31 verteilten Halteschienen 32 gut ersichtlich. Die Halteschienen 32 sind seitlich oder zwischen zwei Aufnahmen 21 angeordnet.

An den Stirnseiten des Kühlerblocks 20 verlaufen die eingangs bereits erwähnten flexiblen und beispielhaft bogenförmig ausgeführten Kühlkanäle 23, die die auf den gegenüberliegenden Seiten einer Aufnahme 21 gelegenen und mit den Kühlplatten 24 verbundenen Kühlkanäle 23 miteinander verbinden. Der bogenförmige Verlauf der Kühlkanäle 23 an den Stirnseiten einer jeweiligen Aufnahme 21 ermöglicht eine gewisse Flexibilität der Kühlkanäle 23 bei der Kraftbeaufschlagung der Kühlmittel oder Kältemittel führenden Struktur durch die Spannvorrichtung 30. Durch den bogenförmigen Verlauf der Kühlkanäle 23 der Aufnahmen 21 kann die Zuverlässigkeit nach der Montage der Vorrichtung verbessert werden.

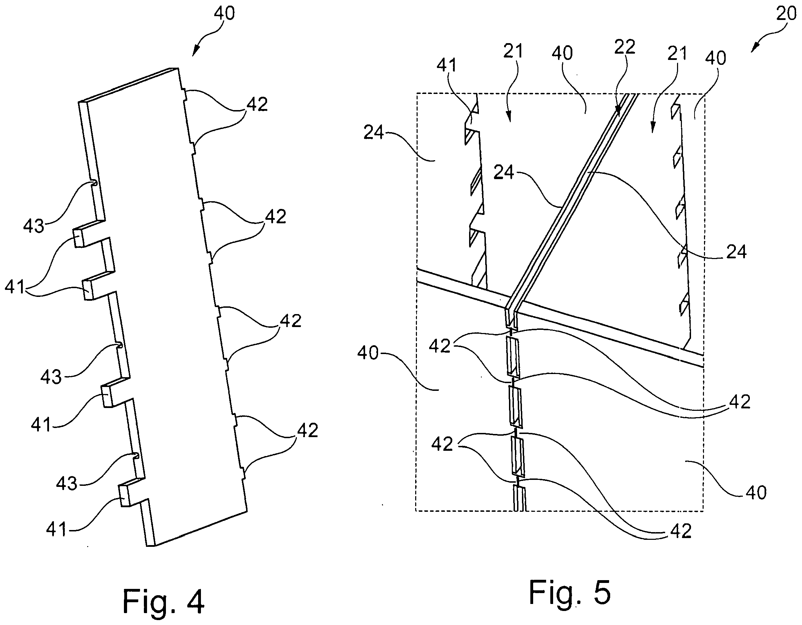

In x-Richtung des in Fig. 3 eingezeichneten Koordinatensystems (d.h. in Fahrzeuglängsachse) sind zwischen zwei Halteschienen 32 jeweils zwei Crashplatten 40 angeordnet. Die Crashplatten 40 begrenzen zusammen mit der Kühlmittel oder Kältemittel führenden Struktur 22 jeweils eine Aufnahme 21 für ein Speicherzellenmodul 10. Die Anordnung der Crashplatten 40 geht deutlicher aus den Fig. 4 bis 6 hervor.

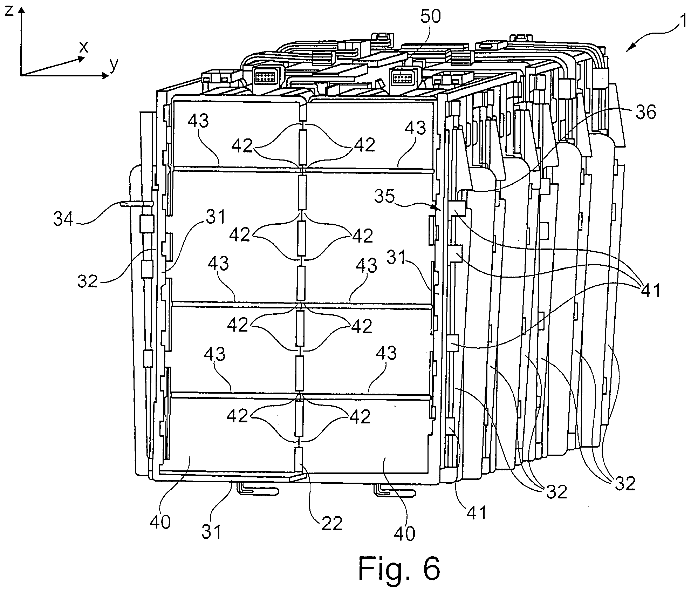

In Fig. 4 ist eine Crashplatte 40 vergrößert dargestellt. Die Crashplatte 40 weist entlang ihrer einen Seitenkante als Crashzapfen bezeichnete Vorsprünge 41 auf. Entlang der gegenüberliegenden Seitenkante weist die Crashplatte 40 ebenfalls als Crashzapfen 42 bezeichnete Vorsprünge auf, die jedoch im Vergleich zu den Crashzapfen 41 wesentlich kürzer sind. Die Crashzapfen 41 erstrecken sich durch die Kühlmittel oder Kältemittel führende Struktur, d.h. die Kühlplatte 24, die Spannplatte 31 sowie die Halteschiene 32, hindurch (vgl. Fig. 5 und 6).

Die Crashzapfen 41 dienen im Falle eines Fahrzeugcrashs dazu, auf die Vorrichtung wirkende Kräfte aufzunehmen und um die einzelnen Speicherzellen 12 eines jeweiligen Speicherzellenmoduls 10 herum zu leiten. Den gleichen Zweck erfüllen die kürzeren Crashzapfen 42, welche in Kontakt mit korrespondierenden Crashzapfen 42 einer benachbarten Crashplatte 40 stehen. Dies kann beispielsweise den perspektivischen Darstellungen der Fig. 5 und 6 entnommen werden. Durch die Crashzapfen 42 wird sichergestellt, dass im Falle eines Crashs auftretende Kräfte vollständig durch die Vorrichtung 1 hindurchgeleitet werden. Insbesondere kann auch eine Verformung der in y-Richtung in der Mitte angeordneten Kühlplatten 31 vermieden werden.

Fig. 6 zeigt eine perspektivische und geschnittene Darstellung einer erfindungsgemäßen Vorrichtung 1 zur Spannungsversorgung. Aus der geschnittenen Darstellung sind die Anordnung und die Ausgestaltung der in x-Richtung hintereinander angeordneten Crashplatten 40 gut ersichtlich. Dabei geht die Anordnung der Crashzapfen 41 und 42 relativ zu der Kühlmittel oder Kältemittel führenden Struktur 22, der Spannplatte 31 sowie der Halteschiene 32 und der Crashzapfen 42 zweier Crashplatten 40 zueinander gut hervor. Die Crashplatten 40 weisen jeweils eine Nut 43 auf, welche sich in x-Richtung über die gesamte Breite des Kühlerblocks 20 bzw. der Vorrichtung 1 erstreckt. Die Nuten 43 dienen zur Führung und Aufnahme der Verbindungsmittel 33 (in Fig. 6 nicht dargestellt), wodurch eine weitere Bauraumminimierung in y-Richtung des Kühlerblocks 20 erzielt wird.

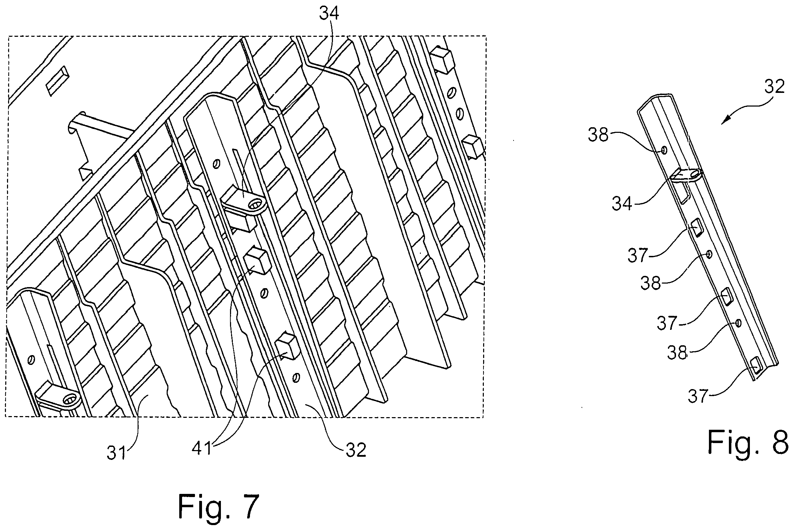

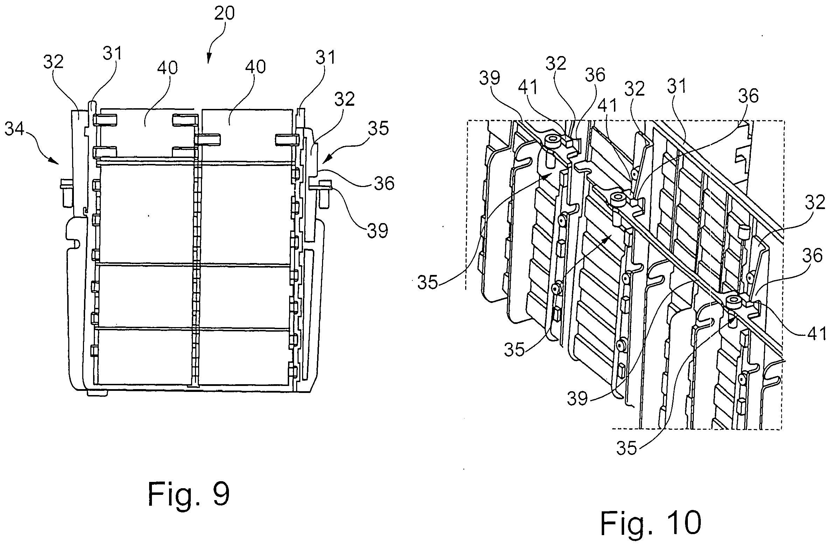

Die Spannvorrichtung ermöglicht darüber hinaus eine vereinfachte Montage der Vorrichtung in einem Fahrzeug. Die Montage erfolgt an den Halteschienen 32, welche auf gegenüberliegenden Seiten des Kühlerblocks 20 angeordnet sind. Hierzu weisen die Halteschienen 32 auf einer Seitenfläche des Kühlerblocks 20 jeweils ein Festlager 34 auf, welches durch einen aus der Halteschiene 32 herausgebogenen Abschnitt mit einer Öse gebildet ist. Dies geht beispielsweise deutlicher aus den Fig. 7, 8 und 9 hervor. An den Ösen können die Halteschienen und damit der Kühlerblock 20 an einem Karosseriebauteil des Fahrzeugs verschraubt werden. An den gegenüberliegenden Halteschienen 32 (vgl. Fig. 9 und 10) ist jeweils ein Auf- oder Loslager 35 vorgesehen, welches eine Gleitbewegung in x-Richtung zulässt. In y-Richtung und z-Richtung wird dagegen eine Bewegung unterbunden. Das Loslager 35 ist durch das Zusammenwirken einer Nut 36 in der Halteschiene 32 und eines Crashzapfens 41 gebildet, wobei in dem zwischen dem Crashzapfen 41 und der Nut 36 gebildeten Schlitz ein Blech 39 des Karosseriebauteils des Fahrzeugs aufgenommen werden kann. Dies ist in der perspektivischen Darstellung der Fig. 10 gezeigt.

Die Spannvorrichtung 30 ermöglicht darüber hinaus die Aufnahme eines elektronischen Bauelements 50, beispielsweise einer elektronischen Steuerung der Vorrichtung 1 zur Spannungsversorgung. Alternativ oder zusätzlich können elektronische Bauelemente auch auf den jeweiligen Speicherzellenmodulen 10 vorgesehen sein. Ebenso ist es möglich, die elektronischen Bauelemente an oder auf dem ersten oder zweiten Gehäuseteil 25, 26 vorzusehen.

Aus der vergrößerten Darstellung der Fig. 7 geht der prinzipielle Aufbau des Kühlerblocks nochmals deutlich hervor. Insbesondere ist gut ersichtlich, dass die Crashzapfen 41 nicht nur die Kühlmittel oder Kältemittel führende Struktur 22 und die Spannplatte 31 durchdringen, sondern auch durch Aussparungen 37 in den Halteschienen 32 ragen. Darüber hinaus ist der das Festlager 34 ausbildende Blechabschnitt mit der Öse gut zu erkennen.

In Fig. 8 sind neben den rechteckigen Ausnehmungen 37 runde Ausnehmungen 38 vorgesehen. Durch die runden Ausnehmungen 38 werden die Verbindungsmittel 33 geführt, um die vorgegebene Kraft zu erzeugen, mit der die Kühlmittel oder Kältemittel führende Struktur 22 an ein jeweiliges Speicherzellenmodul 10 gepresst wird. In Fig. 7 ist ersichtlich, dass die runden Aussparungen 38 auf Höhe der Nuten 43 in den Crashplatten 40 gelegen sind, um die Führung der Verbindungsmittel in einer jeweiligen Nut 43 zu ermöglichen.

Der erfindungsgemäße, beschriebene Kühlerblock 20 weist vorzugsweise eine selbsttragende Struktur auf, wodurch die Handhabung und Montage erleichtert wird. Hierzu wird der Kühlerblock mit zunächst noch aufgeweiteten Spannplatten bereitgestellt. Die bereits fertig gestellten Speicherzellenmodule 10, welche insbesondere die eingangs beschrieben Profile 13 umfassen, werden in jeweilige Aufnahmen des Kühlerblocks 20 eingebracht. Anschließend wird die Verspannung vorgenommen. Die derart vorbereitete Vorrichtung kann dann in die beiden Gehäuseteile eingebracht werden.

In den oben beschriebenen Ausführungsbeispielen wurde die Spannvorrichtung in Verbindung mit zu der Kühlmittel oder Kältemittel führenden Struktur separaten Spannplatten beschrieben. Sofern die Kühlplatten der Kühlmittel oder Kältemittel führenden Struktur ausreichend stabil sind, kann die Verspannung unter Umständen auch über die Kühlplatten selbst vorgenommen werden. Hierzu werden zur Kraftverteilung zweckmäßigerweise die beschriebenen Halteschienen verwendet, welche direkt in Kontakt mit den Kühlplatten stehen und diese an die jeweiligen Speicherzellenmodule pressen. Sofern die Kühlplatten eine ausreichende Steifigkeit aufweisen, können die Halteschienen entfallen.

Der Vorteil des erfindungsgemäßen Vorgehens besteht in einem guten thermischen Kontakt sämtlicher im Wärmeleitpfad vorhandener Bauelemente (Speicherzelle - Profil - Kühlplatte - Kühlkanäle).

### Bezugszeichenliste

- 1: Vorrichtung zur Spannungsversorgung
- 10: Speicherzellenmodul
- 12: Speicherzelle
- 13: Profil
- 20: Kühlerblock
- 21: Aufnahme für Speicherzellenmodul 10
- 22: Kühlmittel führende Struktur
- 23: Kühlkanal
- 24: Kühlplatte
- 25: Gehäuseteil (Gehäusewanne)
- 26: Gehäuseteil (Gehäusedeckel)
- 30: Spannvorrichtung
- 31: Spannplatte
- 32: Halteschiene
- 33: Verbindungsmittel
- 34: Festlager (Öse)
- 35: Loslager
- 36: Nut in der Halteschiene 32
- 37: Ausnehmung
- 38: Ausnehmung
- 40: Crashplatte
- 41: Crashzapfen (nach außen erstreckend)
- 42: Crashzapfen (nach innen erstreckend)
- 43: Nut zur Aufnahme / Führung des Verbindungsmittels 33
- 50: elektronisches Bauelement

## Patentansprüche

1. Vorrichtung (1) zur Spannungsversorgung eines Kraftfahrzeugs, insbesondere eines Pkw, Lkw oder eines Motorrads, mit einem oder mehreren Speicherzellenmodulen (10), welche jeweils ein oder mehrere elektrochemische Speicherzellen (12) und/oder Doppelschichtkondensatoren umfassen, die neben- und/oder übereinander angeordnet sind, und mit einem Kühlerblock (20), der eine Aufnahme (21) für das oder die Speicherzellenmodule (10) und eine Struktur (22) zur Wärmeabfuhr der von dem oder den Speicherzellenmodulen (10) abgegebenen Wärme umfasst, wobei die Struktur (22) zur Wärmeabfuhr zumindest auf einer Seite der Aufnahme (21) vorgesehen ist, wobei der Kühlerblock (20) ferner eine Spannvorrichtung (30) umfasst, welche dazu ausgebildet ist, eine vorgegebene Kraft (F) zu erzeugen, durch die die Struktur (22) zur Wärmeabfuhr an ein jeweiliges Speicherzellenmodul (10) pressbar ist, wobei die Spannvorrichtung (30) eine Anzahl an Verbindungsmitteln (33) und auf den von dem oder den Speicherzellenmodulen (10) abgewandten Seiten der Struktur (22) zur Wärmeabfuhr eine jeweils dort angeordnete Spannplatte (31) umfasst, wobei die Anzahl an Verbindungsmitteln (33) dazu ausgebildet ist, die vorgegebene Kraft zu erzeugen und direkt oder indirekt auf die Struktur (22) zur Wärmeabfuhr zu übertragen, indem die Anzahl an Verbindungsmitteln (33) die Spannplatten (31) kraft- und/oder stoffschlüssig miteinander verbindet,
**dadurch gekennzeichnet, dass** die Spannplatte (31) vor der Kraftbeaufschlagung durch die Anzahl an Verbindungsmitteln (33) eine der Kraftrichtung entgegengesetzt ausgebildete Wölbung aufweist.

2. Vorrichtung nach Anspruch 1, **dadurch gekennzeichnet, dass** die Struktur (22) zur Wärmeabfuhr zumindest auf den gegenüberliegenden Seiten der Aufnahme (21) jeweils eine Kühlplatte (24) mit Kühlkanälen für ein Kühlmittel oder ein Kältemittel umfasst, die an einer Stirnseite der Aufnahme (21) über flexible Kühlkanäle strömungstechnisch verbunden sind.

3. Vorrichtung nach Anspruch 1, **dadurch gekennzeichnet, dass** die Spannplatten (31) aus einem Metall oder einem Kunststoff gebildet sind.

4. Vorrichtung nach Anspruch 1 oder 3, **dadurch gekennzeichnet, dass** die Spannvorrichtung (30), insbesondere die Spannplatten (31), aus einem thermisch isolierenden Material gebildet ist oder ein thermisch isolierendes Material umfassen.

5. Vorrichtung nach Anspruch 2, **dadurch gekennzeichnet, dass** die Anzahl an Verbindungsmitteln (33) mit den auf gegenüberliegenden Seiten der Aufnahme (21) angeordneten Kühlplatten (24) kraft- und/oder formschlüssig miteinander verbunden ist.

6. Vorrichtung nach einem der Ansprüche 1, 3, 4 oder 5, **dadurch gekennzeichnet, dass** die Anzahl an Verbindungsmittel (33) direkt oder indirekt über eine oder mehrere Halteschienen (32), welche aus einem steifen Material gebildet sind, mit den Kühlplatten (24) oder den Spannplatten (31) verbunden sind.

7. Vorrichtung nach einem der Ansprüche 1 bis 6, **dadurch gekennzeichnet, dass** das Verbindungsmittel (33) eine Schraube umfasst, welche in eine insbesondere zylinderförmig ausgebildete Mutter mit Innengewinde eingreift, wobei die Mutter mit der Struktur (22) zur Wärmeabfuhr auf einer Seite der Aufnahme (21) und die Schraube mit der Struktur (22) zur Wärmeaufnahme auf der gegenüberliegenden Seite der Aufnahme (21) in Wirkverbindung steht.

8. Vorrichtung nach Anspruch 7, **dadurch gekennzeichnet, dass** der Zylinderabschnitt der Mutter ein vorderes und ein hinteres Ende aufweist, so dass die Schraube bei der durch sie erzeugten vorgegeben Kraft der Spannvorrichtung (30) nicht über das hintere Ende hinausragt.

9. Vorrichtung nach einem der Ansprüche 1 bis 8, **dadurch gekennzeichnet, dass** zumindest manche der Anzahl an Verbindungsmittel (33) durch die Aufnahme (21) hindurchgeführt sind.

10. Vorrichtung nach Anspruch 9, **dadurch gekennzeichnet, dass** ein jeweiliges Verbindungsmittel (33) seitlich an einem Speicherzellenmodul (10) oder zwischen zwei Speicherzellenmodulen (10) geführt ist.

11. Vorrichtung nach einem der vorherigen Ansprüche, **dadurch gekennzeichnet, dass** die Spannvorrichtung (30), insbesondere die Spannplatten (31), eine Aufnahme (50) und/oder Befestigung für ein elektronisches Bauelement (51), insbesondere eine Steuerung, für die Vorrichtung aufweist.

12. Vorrichtung nach einem der vorherigen Ansprüche, **dadurch gekennzeichnet, dass** in einem Speicherzellenmodul (10) mit einer Mehrzahl an Speicherzellen (12) und/oder Doppelschichtkondensatoren diese über thermisch leitende und mechanisch steife Profile verbunden sind, wobei die Spannvorrichtung (30) die Struktur (22) zur Wärmeabfuhr auf die Profile drückt.

13. Vorrichtung nach einem der vorherigen Ansprüche, **dadurch gekennzeichnet, dass** die Spannvorrichtung (30) eine Elastizität zum Ausgleich thermisch bedingter Längenänderungen des oder der Speicherzellenmodule (10) und/oder der Struktur (22) zur Wärmeabfuhr aufweist.

14. Vorrichtung nach Anspruch 13, **dadurch gekennzeichnet, dass** die Elastizität der Spannvorrichtung (30) durch die Materialeigenschaften der Spannvorrichtung (30) und/oder durch deren konstruktiven Aufbau, insbesondere der Anzahl an Verbindungselementen, bereit gestellt ist.

15. Vorrichtung nach einem der vorherigen Ansprüche, **dadurch gekennzeichnet, dass** zur Fixierung der Vorrichtung an dem Fahrzeug die Spannvorrichtung (30) auf einer Seite der Aufnahme (21) zumindest ein Festlager und auf der anderen Seite der Aufnahme (21) zumindest ein Loslager aufweist.

16. Vorrichtung nach einem der vorherigen Ansprüche, **dadurch gekennzeichnet, dass** der Kühlerblock (20) selbsttragend ist.

17. Vorrichtung nach einem der vorherigen Ansprüche, **dadurch gekennzeichnet, dass** eine Korrosionshemmende Schicht zwischen der Spannvorrichtung (30) und der Struktur (22) zur Wärmeabfuhr vorgesehen ist.

18. Kühlerblock (20) für eine Vorrichtung zur Spannungsversorgung eines Kraftfahrzeugs, insbesondere eines Pkw, Lkw oder eines Motorrads, wobei die Vorrichtung zur Spannungsversorgung ein oder mehrere Speicherzellenmodule (10) aufweist, welche jeweils ein oder mehrere elektrochemische Speicherzellen (12) und/oder Doppelschichtkondensatoren umfassen, die neben- und/oder übereinander angeordnet sind, wobei der Kühlerblock folgendes umfasst:
eine Aufnahme (21) für das oder die Speicherzellenmodule (10), eine Struktur (22) zur Wärmeabfuhr der von dem oder den Speicherzellenmodulen (10) abgegebenen Wärme, wobei die Struktur (22) zur Wärmeabfuhr zumindest auf einer Seite der Aufnahme (21) vorgesehen ist, und ferner eine Spannvorrichtung (30), welche dazu ausgebildet ist, eine vorgegebene Kraft zu erzeugen, durch die die Struktur (22) zur Wärmeabfuhr an ein jeweiliges Speicherzellenmodul (10) pressbar ist, wobei die Spannvorrichtung (30) eine Anzahl an Verbindungsmitteln (33) und auf den von dem oder den Speicherzellenmodulen (10) abgewandten Seiten der Struktur (22) zur Wärmeabfuhr eine jeweils dort angeordnete Spannplatte (31) umfasst, wobei die Anzahl an Verbindungsmitteln (33) dazu ausgebildet ist, die vorgegebene Kraft zu erzeugen und direkt oder indirekt auf die Struktur (22) zur Wärmeabfuhr zu übertragen, indem die Anzahl an Verbindungsmitteln (33) die Spannplatten kraft- und/oder stoffschlüssig miteinander verbindet,
**dadurch gekennzeichnet, dass** die Spannplatte (31) vor der Kraftbeaufschlagung durch die Anzahl an Verbindungsmitteln (33) eine der Kraftrichtung entgegengesetzt ausgebildete Wölbung aufweist.

## Claims

1. Device (1) for the power supply of a motor vehicle, especially of a passenger car, a lorry or a motorbike, having one or more storage cell modules (10) which respectively comprise one or more electrochemical storage cells (12) and/or double layer capacitors which are arranged next to one another and/or on top of one another, and having a radiator block (20) which comprises a mount (21) for the storage cell module or modules (10) and a structure (22) to dissipate the heat released by the storage cell module or modules (10), wherein the heat dissipating structure (22) is provided at least on one side of the mount (21), wherein the radiator block (20) further comprises a clamping device (30) which is configured to generate a predetermined force (F), by which the heat dissipating structure (22) can be pressed onto a respective storage cell module (10), wherein the clamping device (30) comprises a number of connection means (33) and comprises, on the sides of the heat dissipating structure (22) remote from the storage cell module or modules (10), a clamping plate (31) which is respectively arranged there, wherein the number of connection means (33) is configured to generate the predetermined force and to transfer it directly or indirectly onto the heat dissipating structure (22) in that the number of connection means (33) connects the clamping plates (31) together in a force-locking and/or integrally bonded manner,
**characterised in that** prior to the application of force by the number of connection means (33), the clamping plate (31) exhibits a curvature which opposes the direction of force.

2. A device according to claim 1, **characterised in that** the heat dissipating structure (22) comprises at least on the opposite sides of the mount (21) a respective cooling plate (24) with cooling ducts for a coolant or a refrigerant, which are connected in terms of flow at an end face of the mount (21) by flexible cooling ducts.

3. A device according to claim 1, **characterised in that** the clamping plates (31) are formed from a metal or from a plastics material.

4. A device according to claim 1 or claim 3, **characterised in that** the clamping A device (30), especially the clamping plates (31) is/are formed from a thermally insulating material or comprise a thermally insulating material,

5. A device according to claim 2, **characterised in that** the number of connection means (33) are connected together with the cooling plates (24), arranged on opposite sides of the mount (21), in a force-locking and/or form-locking manner.

6. A device according to any one of claims 1, 3, 4 or 5, **characterised in that** the number of connection means (33) are connected to the cooling plates (24) or to the clamping plates (31) directly or indirectly by one or more support rails (32), which are formed from a rigid material.

7. A device according to any one of claims 1 to 6, **characterised in that** the connection means (33) comprises a screw which engages in an especially cylindrical nut having an internal thread, the nut being operatively connected to the heat dissipating structure (22) on one side of the mount (21) and the screw being operatively connected to the heat dissipating structure (22) on the opposite side of the mount (21).

8. A device according to claim 7, **characterised in that** the cylindrical portion of the nut has a front end and a rear end, so that the screw does not project beyond the rear end during application of the predetermined force of the clamping device (30), which force is generated by the screw.

9. A device according to any one of claims 1 to 8, **characterised in that** at least some of the number of connection means (33) are guided through the mount (21).

10. A device according to claim 9, **characterised in that** a respective connection means (33) is guided laterally on a storage cell module (10) or between two storage cell modules (10).

11. A device according to any one of the preceding claims, **characterised in that** the clamping device (30), especially the clamping plates (31) has/have a mount (50) and/or a fastening for an electronic component (51), especially a control means, for the device.

12. A device according to any one of the preceding claims, **characterised in that** in a storage cell module (10) having a plurality of storage cells (12) and/or double layer capacitors, these are connected by thermally conductive and mechanically rigid profiles, the clamping device (30) pressing the heat dissipating structure (22) onto the profiles.

13. A device according to any one of the preceding claims, **characterised in that** the clamping device (30) has a resilience to compensate for thermally induced changes in length of the storage cell module or modules (10) and/or of the heat dissipating structure (22).

14. A device according to claim 13, **characterised in that** the resilience of the clamping device (30) is provided by the material characteristics of the clamping device (30) and/or by the construction thereof, especially of the number of connection elements.

15. A device according to any one of the preceding claims, **characterised in that** in order to fix the device to the vehicle, the clamping device (30) has at least one fixed bearing on one side of the mount (21) and has at least one floating bearing on the other side of the mount (21).

16. A device according to any one of the preceding claims, **characterised in that** the radiator block (20) is self-supporting.

17. A device according to any one of the preceding claims, **characterised in that** a corrosion-inhibiting layer is provided between the clamping device (30) and the heat dissipating structure (22).

18. A radiator block (20) for a device for the power supply of a motor vehicle, especially of a passenger car, a lorry or a motorbike, wherein the power supply A device has one or more storage cell modules (10) which respectively comprise one or more electrochemical storage cells (12) and/or double layer capacitors which are arranged next to one another and/or on top of one another, wherein the radiator block comprises the following:
a mount (21) for the storage cell module or modules (10), a structure (22) to dissipate the heat released by the storage cell module or modules (10), wherein the heat dissipating structure (22) is provided at least on one side of the mount (21), and further comprises a clamping device (30) which is configured to generate a predetermined force, by which the heat dissipating structure (22) can be pressed onto a respective storage cell module (10), wherein the clamping device (30) comprises a number of connection means (33) and comprises, on the sides of the heat dissipating structure (22) remote from the storage cell module or modules (10), a clamping plate (31) which is respectively arranged there, wherein the number of connection means (33) is configured to generate the predetermined force and to transfer it directly or indirectly onto the heat dissipating structure (22) in that the number of connection means (33) connects the clamping plates (31) together in a force-locking and/or integrally bonded manner,
**characterised in that** prior to the application of force by the number of connection means (33), the clamping plate (31) exhibits a curvature which opposes the direction of force.

## Revendications

1. Dispositif (1) d'alimentation en tension d'un véhicule automobile en particulier d'un véhicule de tourisme, d'un véhicule utilitaire ou d'une motocyclette comprenant au moins un module de cellules d'accumulation (10) comportant au moins une cellule d'accumulation électrochimique (12) et/ou condensateur à double couche installés côte à côte et/ou les uns sur les autres, ainsi qu'un bloc de radiateur (20) qui comprend un logement de réception (21) du ou des module(s) de cellules d'accumulation (10) et une structure (22) permettant la dissipation de la chaleur dégagée par le ou les module(s) de cellules d'accumulation (10), la structure (22) de dissipation de la chaleur étant installée sur au moins un côté du logement de réception (21), le bloc de radiateur (20) comprenant en outre un dispositif de serrage (30) qui est réalisé pour permettre d'obtenir une force (F) prédéfinie par laquelle la structure (22) peut être serrée sur un module de cellules d'accumulation (10) respectif, pour permettre la dissipation de la chaleur, le dispositif de serrage (30) comprenant un ensemble de moyens de liaison (33), et, sur les côtés de la structure (22) opposés au(x) module(s) de cellules d'accumulation (10), une plaque de serrage respective (31) pour permettre la dissipation de la chaleur, les moyens de liaison de l'ensemble de moyens de liaison (33) étant réalisés pour permettre d'obtenir la force prédéfinie et de la transmettre directement ou indirectement à la structure (22) pour permettre la dissipation de la chaleur, dans la mesure où les moyens de liaison (33) de l'ensemble de moyens de liaison (33) relient entre elles les plaques de serrage (31) par une liaison par la force et/ou par la matière,
**caractérisé en ce que**
avant d'être soumise à une force exercée par les moyens de liaison de l'ensemble de moyens de liaison (33) la plaque de serrage (31) a une courbure dirigée à l'opposé de la direction de la force.

2. Dispositif conforme à la revendication 1,
**caractérisé en ce que**
pour permettre la dissipation de la chaleur la structure (22) comporte, au moins sur les côtés opposés du logement de réception (21), une plaque de refroidissement respective (24) équipée de canaux de refroidissement pour un fluide de refroidissement ou un fluide frigorifique qui sont reliés par une liaison fluidique sur une face frontale du logement de réception (21) par l'intermédiaire de canaux de refroidissement flexibles.

3. Dispositif conforme à la revendication 1,
**caractérisé en ce que**
les plaques de serrage (31) sont réalisées en un métal ou un matériau synthétique.

4. Dispositif conforme à la revendication 1 ou 3,
**caractérisé en ce que**
le dispositif de serrage (30), en particulier les plaques de serrage (31) sont réalisées en un matériau thermiquement isolant ou renferment un matériau thermiquement isolant.

5. Dispositif conforme à la revendication 2,
**caractérisé en ce que**
les moyens de liaison de l'ensemble de moyens de liaison (33) sont reliés aux plaques de refroidissement (24) installées sur les côtés opposés du logement de réception (21) par une liaison par la force et/ou par la forme.

6. Dispositif conforme à l'une des revendications 1, 3, 4 ou 5,
**caractérisé en ce que**
les moyens de liaison de l'ensemble de moyens de liaison (33) sont reliés directement ou indirectement aux plaques de refroidissement (24) ou aux plaques de serrage (31) par l'intermédiaire d'au moins un rail de maintien (32) réalisé en un matériau rigide.

7. Dispositif conforme à l'une des revendications 1 à 6,
**caractérisé en ce que**
les moyens de liaison (33) comportent une vis qui vient en prise avec un écrou équipé d'un filetage interne réalisé en particulier en forme de cylindre, l'écrou étant en liaison fonctionnelle avec la structure (22) sur un côté du logement de réception (21) pour permettre la dissipation de chaleur et la vis étant en liaison fonctionnelle avec la structure (22), sur le côté opposé du logement de réception (21) pour permettre l'absorption de la chaleur.

8. Dispositif conforme à la revendication 7,
**caractérisé en ce que**
le segment cylindrique de l'écrou a une extrémité avant et une extrémité arrière de sorte que, du fait de la force prédéfinie exercée par le dispositif de serrage (30), la vis ne dépasse pas de l'extrémité arrière.

9. Dispositif conforme à l'une des revendications 1 à 8,
**caractérisé en ce qu'**
au moins certains des moyens de liaison (33) de l'ensemble de moyens de liaison (33) passent au travers du logement de réception (21).

10. Dispositif conforme à la revendication 9,
**caractérisé en ce que**
chaque moyen de liaison (33) passe latéralement à un module de cellules d'accumulation (10) ou entre deux modules de cellules d'accumulation (10).

11. Dispositif conforme à l'une des revendications précédentes,
**caractérisé en ce que**
le dispositif de serrage (30), en particulier les plaques de serrage (31) comportent un logement de réception (50) et/ou un organe de fixation d'un composant électronique (51) en particulier d'un organe de commande du dispositif.

12. Dispositif conforme à l'une des revendications précédentes,
**caractérisé en ce que**
dans un module de cellules d'accumulation (10) ayant plusieurs cellules d'accumulation (12) et/ou condensateurs à double couche ceux-ci sont reliés par des profilés rigides mécaniquement et thermiquement conducteurs, le dispositif de serrage (30) poussant la structure (22) sur les profilés pour permettre la dissipation de la chaleur.

13. Dispositif conforme à l'une des revendications précédentes,
**caractérisé en ce que**
le dispositif de serrage (30) présente une élasticité pour permettre de compenser les variations de longueur dues à des contraintes thermiques du ou des module(s) de cellules d'accumulation (10) et/ou de la structure (22) pour permettre la dissipation de la chaleur.

14. Dispositif conforme à la revendication 13,
**caractérisé en ce que**
l'élasticité du dispositif de serrage (30) est fournie par les caractéristiques propres du matériau constitutif de ce dispositif de serrage (30) et/ou sa configuration, en particulier le nombre d'éléments de liaison.

15. Dispositif conforme à l'une des revendications précédentes,
**caractérisé en ce que**
pour permettre de fixer le dispositif sur le véhicule, le dispositif de serrage (30) comprend, sur un côté du logement de réception (21) au moins un palier fixe et sur l'autre côté du logement de réception (21) au moins un palier mobile.

16. Dispositif conforme à l'une des revendications précédentes,
**caractérisé en ce que**
le bloc de radiateur (20) est autoportant.

17. Dispositif conforme à l'une des revendications précédentes,
**caractérisé en ce qu'**
il est prévu une couche anticorrosion entre le dispositif de serrage (30) et la structure (22) permettant la dissipation de la chaleur.

18. Bloc de radiateur (20) destiné à un dispositif d'alimentation en tension d'un véhicule automobile, en particulier d'un véhicule de tourisme, d'un véhicule utilitaire ou d'une motocyclette, pour permettre l'alimentation en tension ce véhicule comprenant au moins un module de cellules d'accumulation (10) qui comprennent chacune au moins une cellule d'accumulation électrochimique (12) et/ ou au moins un condensateur à double couche qui sont installés côte à côte et/ou les uns sur les autres, ce bloc de radiateurs comprenant :
un logement de réception (21) du ou des module(s) de cellules d'accumulation (10), une structure (22) pour permettre la dissipation de la chaleur dégagée par le ou les module(s) de cellules d'accumulation (10), la structure (22) de dissipation de la chaleur étant installée sur au moins un côté du logement de réception (21), et en outre un dispositif de serrage (30) qui est réalisé pour permettre d'obtenir une force prédéfinie par laquelle la structure (22) de dissipation de la chaleur peut être serrée sur un module de cellules d'accumulation (10) respectif, le dispositif de serrage (30) comprenant un ensemble de moyens de liaison (33), et sur les côtés de la structure (22) de dissipation de la chaleur opposés aux modules de cellules d'accumulation (10), une plaque de serrage (31) respective, les moyens de liaison de l'ensemble de moyens de liaison (33) étant réalisés pour permettre d'obtenir la force prédéfinie et de la transmettre directement ou indirectement à la structure (22) de dissipation de la chaleur dans la mesure où les moyens de liaison de l'ensemble de moyens de liaison (33) relient entre elles les plaques de serrage par une liaison par la force et/ou par la forme,
**caractérisé en ce que**
avant d'être soumise à une force exercée par les moyens de liaison de l'ensemble de moyens de liaison (33) la plaque de serrage (31) a une courbure dirigée à l'opposé de la direction de la force.
